# EUROPEAN PATENT APPLICATION

(11) **EP 0 568 010 A1**
(43) Date of publication of application: **03.11.1993**
(21) Application number: 93106812.6
(22) Date of filing: 27.04.1993
(51) Int. Cl.: G11B 7/14, G11B 7/13, G11B 7/135, G11B 7/125

(54) **Method and apparatus for reading optical data**

(30) Priority: 28.04.1992 JP 110427/92
(71) Applicant: OLYMPUS OPTICAL CO., LTD., Tokyo 151 (JP)
(72) Inventor: Tani, Naoaki, c/o Int. Property & Legal Department, Hachioji-shi, Tokyo (JP)
(74) Representative: KUHNEN, WACKER & PARTNER

(57) **Abstract**

A laser beam emitted from the light source (40) passes through the collimate lens (42) and the shaping prism (44) in the mentioned order, and shaped into a parallel beam (66) having a circular cross section. After passing the diaphragm (46), the parallel beam (66) is made incident on the cylindrical lens (48a), and converged by the objective lens (50). The beam component of the parallel beam made incident on the refraction-free surface of the cylindrical lens (48a) is converged at the focal position (50a) of the objective lens (50), whereas the component made incident on the refraction surface of the cylindrical lens (48a) is converged at a position (50b) located on a farther side of the focal point (50a) of the objective lens (50). The focal point (50a) of the objective lens (50) is set on the recording surface (54) of an optical card (52). On the optical card recording surface (54), formed is a beam spot extending in a slit-like shape (70).

## Description

The present invention relates to a method for reading optical data and an apparatus therefor, more specifically a method and a device for reading data items on a number of tracks in parallel.

A conventional optical data recording/reproduction system executes write and read of optical data by means of an optical head a laser beam scanning tracks formed on, for example, an optical card or the like. The following description states mainly a read-out of data.

In the optical data recording/reproduction system, the processing speed for reading out data is determined based on the speed of a relative movement of an optical recording medium with respect to the optical head in the direction of extension of the track.

In one type of a conventional optical head, one of the tracks is irradiated by a small spot of a light beam emitted from the point light source such as a laser diode. Such an optical head is hereinafter referred to as a single track type head.

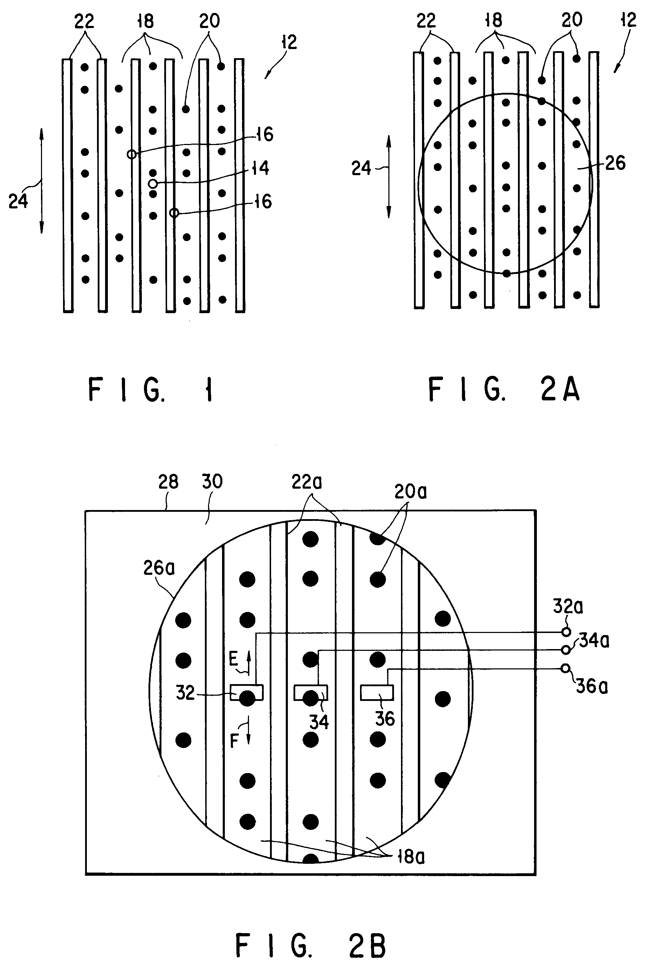

Fig. 1 shows an irradiation operation of the single track type head.

A recording surface 12 of an optical recording medium is irradiated by three small beam spots each having a substantially circular shape, namely, a main beam spot 14 for reading (or writing) data, and two sub-beam spots 16 for obtaining signals used for a tracking servo control mechanism. Fig. 1 also depicts tracks 18, pits 20 as recorded data, and track guides 22, and as shown, the direction of relative movement between an optical recording medium and an optical head coincides with the direction of extension of the tracks 18.

The single track optical head executes read-out of data by means of one main beam spot 14 for each and every track 18. In one read-out operation, it is only the data contained in one track that can be picked up. Therefore, a significant increase in reading speed cannot be expected.

In other conventional optical heads, a number of tracks are irradiated at the same time, and data on the tracks are picked up in parallel. Therefore, the reading speed can be considerably increased. Such an optical head is hereinafter referred to as a multi-track type head.

As shown in Fig. 2A, the multi-track type head irradiates an area 26 having substantially a circular shape, wide enough to cover a plurality of tracks, with a light beam emitted from a surface light source such as an LED.

As can be seen in Fig. 2B, an image 26a of an illuminated region 26 is formed on a light receiving surface 30 of a light beam detector 28 via an image forming optical mechanism. The formed image 26a contains images 18a, 20a, and 22a corresponding to tracks 18, a plurality of pits 20, and track guides 22. On a light receiving surface 30 of the light detector 28, provided are a number of, for example, three pit detecting light receiving elements 32, 34, and 36 corresponding to three tracks.

When the optical recording medium and the optical head change their positions in relative to each other in the direction of extension of the tracks 18, pit images 20a pass on corresponding pit detecting light receiving elements in the direction indicated by an arrow E or F. The amount of light received by each of pit detecting light receiving elements 32, 34 and 36 varies in accordance with the pit image 20a. Such variation of the light receiving amount is expressed in the form of outputs from output terminals 32a, 34a, and 36a of the light receiving elements 32, 34 and 36, and thus data items recorded on a plurality of tracks can be read out in parallel.

In a remodeled version of the multi-track head, there is provided, besides a surface light source for irradiating a wide area 26, a point light source for forming a small main beam spot 14 (Fig. 1), in similar to the case of the single track type head. A multi-track type head having such a structure is able to not only read data but also write data.

The reproduction resolution of a single track type head is determined by the diameter of a beam spot 14 having substantially the same size as that of a pit 20.

In contrast, the multi-track type head deals with a two-dimensional wider area of a beam spot 14 so as to illuminate an area 26 (Fig. 2A) containing a number of pits 20 in the direction of extension of the tracks 18. The beam spot for forming an illuminated area 26 does not have a reproducing resolution property. The width of each light receiving element of the light detector 28, i.e. the dimension of an element in the direction of extension of the tracks on the light receiving surface of the light receiving element, is set substantially the same as the diameter of the pit image 20a. With such a structure, the light detector is able to have a reproduction resolution property, and each and every pit 20 can be accurately detected.

However, since the total area of the light receiving surfaces of the light receiving elements 32, 34, and 36 is naturally very small with respect to the area of the image 26a of an illuminated area, the amount of light actually used for detecting the pits 20 is only 1/100 to 1/10000 of the total amount of light irradiated on the optical recording medium. Thus, the efficiency of use of a light beam is low.

Suppose that the illuminate area 26 is further expanded in order to increase the number of tracks 18, from which data items are read out in parallel, by a multiplication of an integer n. In this case, the expansion of the illuminated area 18 occurs in the two-dimensional directions, the efficiency of use of an optical beam decreases approximately in proportional to the square of n. As a result, as the number of tracks 18 to be read in parallel increases, the signal-to-noise ratio of the pit detecting signal significantly decreases, thereby lowering the reliability of the data read.

An increase in the amount of light emitted from the light source is one way of raising the intensity of a pit detecting signal and improving the S/N. However, the maximum possible amount of light is limited, and is only about several to ten times as much as the present amount, and therefore a drastic improvement cannot be expected. Further, in such a case, the amount of power consumed increases greatly, and the life of the light source is correspondingly reduced.

The above-described drawbacks of the conventional optical heads can be eliminated by the present invention.

A purpose of the present invention is to provide an optical data reading method and an apparatus therefore which can read data items on a number of tracks of an optical recording medium in parallel at a high reliability.

Another purpose of the present invention is to provide an optical head having a high efficiency of use of a light beam, and capable of detecting pits on a number of tracks of an optical recording medium in parallel at a high reliability.

According to an aspect of the present invention, there is provided a method of simultaneously reading optical data items recorded on a plurality of tracks arranged in parallel on an optical recording medium, in the direction of arrangement of the tracks, the method comprising the steps of:
emitting a light beam from light source means;
making a slit-like spot beam from the light beam, the slit-like spot beam having components in longitudinal and transverse axis directions crossing at right angle;
converging the slit-like spot beam by means of converging means having its focal point on the optical recording medium, the longitudinal axial direction component of the slit-like spot beam being substantially aligned with the direction of arrangement of the tracks, and converged at a non-focal position of the converging means, and having a length sufficient to illuminate the tracks in the direction of arrangement of the tracks, and the transverse axial direction component of the slit-like spot being converged at a focal position of the converging means; and
photoelectrically converting a light beam from an area of the optical recording medium which corresponds to the slit-like spot, whereby to read the data items recorded on the tracks along the direction of arrangement of the tracks at the same time.

According to another aspect of the present invention, there is provided a device for simultaneously reading optical data items recorded on a plurality of tracks arranged in parallel on an optical recording medium along the direction of arrangement of the tracks, the device comprising:
light source means for emitting a light beam;
forming means for forming a slit-like spot from the light beam, the slit-like spot beam having components in longitudinal and transverse axis directions crossing at right angle;
converging means, having a focal point on the optical recording medium, for converging the slit-like spot beam, the longitudinal axial direction component of the slit-like spot beam being substantially aligned with the direction of arrangement of the tracks, and converged at a non-focal position of the converging means, and having a length sufficient to illuminate the tracks in the direction of arrangement of the tracks, and the transverse axial direction component of the slit-like spot being converged at a focal position of the converging means; and
means for photoelectrically converting a light beam from an area of the optical recording medium which corresponds to the slit-like spot, whereby to read the data items recorded on the tracks along the direction of arrangement of the tracks at the same time.

According to another aspect of the present invention, there is provided an optical head for simultaneously detecting pits recorded on a plurality of tracks arranged in parallel on an optical recording medium along the direction of arrangement of the tracks, the optical head comprising:
light source means for emitting a light beam;
forming means for forming a slit-like spot from the light beam, the slit-like spot beam having components in longitudinal and transverse axis directions crossing at right angle;
converging means, having a focal point on the optical recording medium, for converging the slit-like spot beam, the longitudinal axial direction component of the slit-like spot beam being substantially aligned with the direction of arrangement of the tracks, and converged at a non-focal position of the converging means, and having a length sufficient to illuminate the tracks in the direction of arrangement of the tracks, and the transverse axial direction component of the slit-like spot being converged at a focal position of the converging means; and
a plurality of detection means, each arranged to face a corresponding track, in a surface at which formed is an image of an area of the optical recording medium corresponding to the slit-like spot, for detecting an image of pits of the corresponding track.

Alternatively, in the apparatus or the optical head of the present invention, the forming means can be an optical element having an optical axis and having different refractive index distributions or different radii of curvature in its two cross sections crossing at right angle with each other.

According to an embodiment of the invention, the forming means is a cylindrical lens having a negative power.

According to another embodiment of the invention, the forming means is a cylindrical lens having a positive power.

The position where the longitudinal axial direction component of the slit-like spot can be far from or close to the focal position of the converging means.

The optical head of the present invention may further comprise detection means for detecting and a focus error and/or a tracking error, and the detection means is located in an image forming surface so as not to detect an image of a pit in the case where there is no error.

In the optical head of the invention, the transverse direction component of the slit-like spot should preferably have a width substantially the same as the diameter of the pit.

With the above-described constitution, in the slit-like beam spot formed on an optical recording medium, the transverse axial direction component converges at the optical recording medium to set a width thereof, and the longitudinal axial direction component sets a length enough to be able to illuminate a plurality of tracks at the same time. In other words, the shape of a slit-like spot corresponds to a shape obtained by one-dimensionally extending a fine beam spot formed by a conventional single track type head, in the direction of arrangement of the tracks.

In this case, the extension of the spot is only in one direction (track arrangement direction), and therefore a plurality of tracks on the optical recording medium can be efficiently illuminated. More specifically, the ratio of the amount of light actually used for reading data with respect to the total mount of light irradiated on the optical recording medium can be increased.

According to the method and device of the present invention, a number of tracks on an optical recording medium can be illuminated at a high efficiency by use of a slit-like beam spot, and therefore pits on the tracks can be detected in parallel at a high reliability.

This invention can be more fully understood from the following detailed description when taken in conjunction with the accompanying drawings, in which:
Fig. 1 is a plan view showing a beam spot formed by a conventional optical head for reading data on a single track by one beam spot;
Fig. 2A is a plan view showing a beam spot formed by a conventional optical head for reading data on a number of tracks by one beam spot;
Fig. 2B is a diagram showing an arrangement of light receiving elements of the optical detector used in the optical head shown in Fig. 2A, along with an image of tracks;
Fig. 3A is a diagram showing a structure of the optical head according to the first embodiment of the present invention, viewed from the direction of relative movement (X direction) between the optical head and an optical card;
Fig. 3B is a diagram showing the same optical head as shown in Fig. 3A, viewed from the Y direction which crosses with the X direction at right angle;
Fig. 4 is a plan view of a beam spot formed on an optical card recording surface by the optical head of the present invention;
Fig. 5 is a diagram showing an arrangement of light receiving elements of the optical detector used in the optical head shown in Fig. 2A, along with an image of tracks;
Fig. 6A is a diagram showing an optical head according to the second embodiment of the present invention, and corresponds to Fig. 3A;
Fig. 6B is a diagram showing an optical head according to the second embodiment of the present invention, and corresponds to Fig. 3B;
Fig. 7A is a diagram showing an optical head according to the third embodiment of the present invention, and corresponds to Fig. 3A; and
Fig. 7B is a diagram showing an optical head according to the third embodiment of the present invention, and corresponds to Fig. 3B.

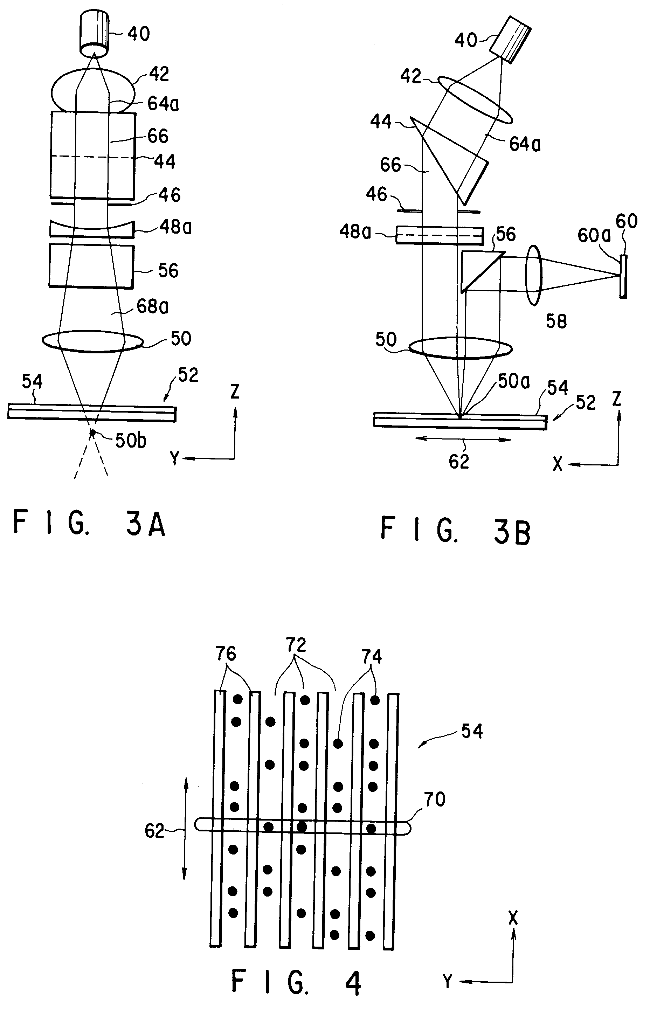

As can be seen from Figs. 3A and 3B, the optical head according to the first embodiment of the present invention includes a first optical system for emitting a laser beam to an optical recording medium and a second optical system for reading data by detecting a reflection beam from the optical recording medium.

The first optical system of the optical head comprises a laser diode 40 serving as a light source, and a collimate lens 42, a shaping prism 44, a diaphragm 46, a cylindrical lens 48a and an objective lens 50, arranged along the optical path of the laser beam emitted from the laser diode in the mentioned order.

The optical device, from which data is read out by the optical head, namely, an optical card 52, is arranged such that a recording surface 54 thereof is situated at the focal position 50a of the objective lens 50 of the optical head. It should be noted that not only the optical card 52, but also other media including an optical disk can be used as the optical recording medium.

The second optical system of the optical head comprises a mirror 56, an image-forming lens 58, and an optical detector 60, arranged along the optical path of the beam after reflecting on the recording surface 54 of the optical card, and passing through the objective lens 50, in the mentioned order. The image-forming lens 58 and the optical detector 60 are not shown in Fig. 3A.

Regarding the objective lens 50, there are set three optical axes, i.e. Z-axis, X-axis perpendicular to the Z-axis, in the direction 62 (see Fig. 3B) of relative movement between the optical head and the optical card 52, and Y-axis extending perpendicular to the Z-axis and X-axis.

An illumination operation performed by the optical head on the optical head 52 will now be described.

A laser beam emitted from the laser diode is shaped by a collimate lens 42 into a parallel beam 64a having a substantially ellipsoidal cross section. Then, only the major axis component of the ellipse is compressed by the shaping prism 44 such that the beam is shaped into a parallel beam 66 having substantially a circular cross section.

The circular parallel beam 66 is made to pass the diaphragm 46 to reduce the diameter of the cross section of the beam such that the spot size of the beam is adjusted to a predetermined value, and the beam is made incident on the cylindrical lens 48a having a negative power. The direction of extension of the generator of the cylindrical lens coincides with the X direction.

As shown in Fig. 4, the beam which passed through the cylindrical lens 48a is converged by the objective lens 50, and thus a slit-like beam spot 70 is formed on an optical card recording medium 54.

The transverse component (the transverse axial direction (X direction)) of the slit-like beam spot 70 lies in the plane along the generator (X direction) of the cylindrical lens 48a (i.e. the plane free from a refraction effect), whereas the longitudinal component (Y direction) of the slit-like beam spot 70 lies in the plane along the Y direction of the cylindrical lens 48a (i.e. the plane having a refraction effect). The following is a detailed description of such a constitution.

As shown in Fig. 3B, the beam component of the circular parallel beam 66 which is made incident on the refraction-free plane of the cylindrical lens 58a passes therethrough while maintaining its parallelism. Then, the beam component is converged at the focal point 50b on the optical card recording surface 54 by the objective lens 50, thereby setting the transverse component (X direction) of the beam spot 70 (Fig. 4) which is converged up to the refraction limit of the objective lens 50. The X directional axis of the beam spot 70 is approximately the same as the diameter of a spot (denoted by reference numeral 14 in Fig. 1) formed by the conventional single track type optical head.

In contrast, as shown in Fig. 3A, the beam component of the circular parallel beam 66 which is made incident on the refraction surface of the cylindrical lens 48a is converted into a slightly-diverging beam 68a having an ellipsoidal cross section by means of the negative power of the cylindrical lens 48a, after passing therethrough. The position 50b at which the beam 68a is converged by the objective lens 50 is located on the further side of the focal position 50a (Fig. 3B) of the objective lens 50, due to the divergence of the beam 68a. As a result, an insufficiently converged transverse component (Y direction) of the beam spot 70 (Fig. 4) lies on the optical card recording surface 54. The measure of the beam spot 70 in the longitudinal axial direction (Y direction) is large enough with respect to that in the transverse axial direction (X direction) made by the refraction-free surface of the cylindrical lens 48a.

Thus, a slit-like beam spot 70 is formed on an optical card recording surface 54 by the optical head shown in Fig. 3A and 3B.

Fig. 4 shows a two-dimensional structure of the optical card recording surface 54, with a slit-like beam spot 70 such as above formed thereon.

On the optical card recording surface 54, formed are a number of tracks 72 arranged in parallel with each other. Along the center axis of each track 72, formed are pits 74 recorded as data items or marks. Between any adjacent pair of tracks 72, formed is a track guide 76 for tracking the optical head, in parallel with the tracks.

The spot 70 can illuminate a number of tracks 72 at the same time by setting the generator of the cylindrical lens 48a such that the direction of arrangement of the tracks 72 (Y direction), and the longitudinal axial direction of the slit-like beam spot 70 substantially coincide with each other.

A data reproduction from a number of tracks 72 by the optical head according to this embodiment will now be described. The following description is directed to an example in which, of the five tracks shown in Fig. 4, three center tracks are used for reading data.

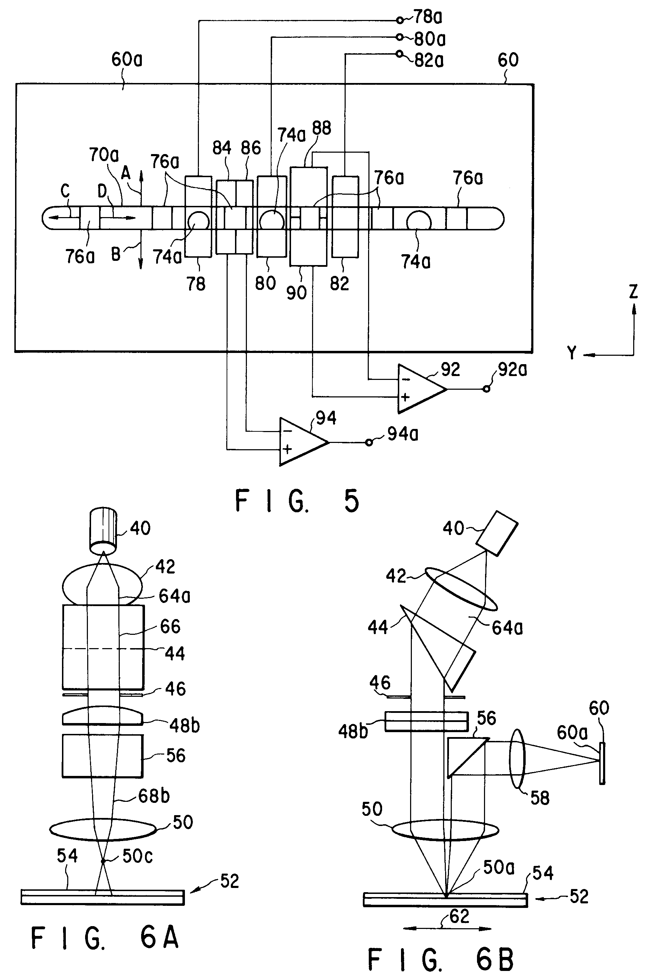

In the region of the optical card recording surface 54 which is illuminated by the slit-like beam spot 70 shown in Fig. 4, a light beam reflects regularly while the amount of light being modulated in accordance with the presence or absence of pits 74 and track guides 76. The reflection beam, as shown in Figs. 3A and 3B, passes through the objective lens 50, and then reflects on the mirror 56. After that, the beam is input to the image-forming lens 58 such as to form an image on the optical detector 60. Consequently, the image of the beam spot 70 (denoted by 70a in Fig. 5) is formed on an light receiving surface 60a of the optical detector 60. The amount of light of the reflection beam from the optical card recording surface 54 is modulated by pits 74 and track guides 76, and therefore the image of each of the pits 74 and the track guides 76 (denoted by 74a and 76a in Fig. 5) is included in the image if the beam spot 70.

Fig. 5 shows the optical detector 60, and particularly, an arrangement of heat receiving elements on the light receiving surface 60a, and an image-forming state as well. The light-receiving surface 60a lies in the Y-Z plane as shown. However, in an optical image formed on the light receiving surface 60a, the Z direction corresponds to the X direction of Fig. 4.

On the light receiving surface 60a of the optical detector 60, arranged are pit detecting light receiving elements 78, 80 and 82 placed in the Y direction so as to correspond to the three tracks 72, respectively, track error detecting light receiving elements 84 and 86 divided into two in the Y direction, and focus error detecting light receiving elements 88 and 90 divided into two in the Z direction. While there are no focus error or no track error, the image 70a of the beam spot 70 (Fig. 5), the images 74a of the pits 74 (Fig. 5) in the image, and the image 88a of the track guides 76 (Fig. 5) are arranged as shown in the figure. In other words, the focus error detecting elements 88 and 90 are arranged such that the pit images 74a are not located on these elements.

Pit detection signals are output to output terminals 78a, 80a, and 82a of the pit detecting light receiving elements.

Outputs from the upper and lower focus error detecting elements 88 and 90 are supplied respectively to - and + input terminals of the first differential amplifier 92.

Outputs from the track error detecting elements 84 and 86 are supplied respectively to - and + input terminals of the second differential amplifier 94.

As shown in Fig. 4, an optical system for detecting a focus error is set so as to detect a reflection beam from the optical card 52 from an eccentric position with respect to the optical axis of the objective lens 50, which is so-called an off-axis mode.

Detection of an focus error is executed in the following manner.

If a focus error occurs, the entire beam spot image 70a is moved in the direction indicated by arrow A or B, along the Z direction, on the light receiving surface 60a of the optical detector 60. During the movement, the position of a beam spot image 70a is detected as a focus error signal output to the output terminal 92a of the first differential amplifier 92 on the basis of a difference between outputs from the two focus error detecting elements 88 and 90. As mentioned before, since the focus error detecting elements 88 and 90 are arranged such that the pit images 74a are not located on these elements unless a track error occurs, a focus error signal does not contain an error based on a pit image 74a.

The method of detecting a focus error is not limited to the off-axis method, but may be other conventional methods such as the astigmatism method, the critical angle method, and the knife edge method. Alternatively, another optical detector may be provided for detection of a focus error.

Detection of a track error is executed in the following manner.

When an optical card 52 and a beam spot 70 move relatively to each other along the Y direction vertical to the track 72, pit images 74a and track guide images 76a move in the direction indicated by arrow C or D within the beam spot image 70a on the light receiving surface 60a of the optical detector 60. During the movement, the position of the track guide image 76a is detected as a track error signal output to the output terminal 94a of the second differential amplifier 94 on the basis of a difference between outputs from the two track error detecting elements 86 and 88.

The pits 74 formed in the tracks 72 are detected as the beam spot 70 passes on the pits 74 on the basis of variation of the amount of light caused by the pit images 86a formed on the light receiving surface of each of pit detecting elements 78, 80, and 82. In other words, photoelectric variation outputs from pit detecting elements 78, 80, and 82 serve as pit detection signals of tracks 72 each corresponding to a respective pit detection element. During the detection of pits, the driving operation of the optical head is controlled so as not to create focus errors, or track errors.

As described, the optical head of the first embodiment can read data items recorded in the forms of pits 74 on a plurality of tracks 72 at the same time.

The reproduction resolution of the optical head according to the first embodiment is determined by the minor-axis-direction width of the beam spot 70 (X direction in parallel to tracks 72 on the optical card recording surface shown in Fig. 4). The width is set almost the same as the diameter of a spot formed by a single track type head.

The width of the light receiving surface of each of the pit detection element 78, 80, and 82 arranged along the minor axis direction (Z direction in parallel to tracks images 72a on the light receiving surface 60a of the optical detector shown in Fig. 5), has nothing to do with the reproduction resolution.

Therefore, as shown in Fig. 5, the Z-direction width of each of the pit detection elements 78, 80, and 82 can be made wider than the Z-direction (transverse axis) width of the beam spot images 70a. With the above-described constitution, as regards in the Z direction in parallel to a track image 72a, the loss of the amount of light in the light receiving surface 60a of the optical detector can be relieved. Consequently, a pit detection signal having a high S/N can be obtained, and the data read out from a plurality of tracks in parallel have a high reliability.

Further, even if the major axis direction width (Y direction shown in Fig. 5) of the beam spot 70 is expanded, and the number of tracks 72 to be read in parallel is increased by n times, the efficiency of use of light only decreases approximately in proportional to n. This is because the illuminated region is elongated only in one dimension (Y direction) when the spot is expanded. It means that the number of tracks 72 to be read in parallel can be easily increased.

Figs. 6A and 6B shows the second embodiment of the present invention. In these figures, structural elements similar to those of the first embodiment are denoted by the same reference numerals.

The difference between the optical heads according to the second and first embodiments is that the cylindrical lens 48a having a negative power in the first embodiment is replaced by a cylindrical lens 48b having a positive power.

The optical path of the laser beam from a laser diode 40 to a diaphragm 46 is similar to that of the first embodiment.

After going through the diaphragm 46, the beam passes through the cylindrical lens 48b having the positive power. The beam component made incident on the refraction-free surface of the cylindrical lens 48b is formed into the minor axis direction (X direction) component of a spot 70 (Fig. 4) in the same principle described in relation to the case shown in Fig. 4, and the description thereof is omitted.

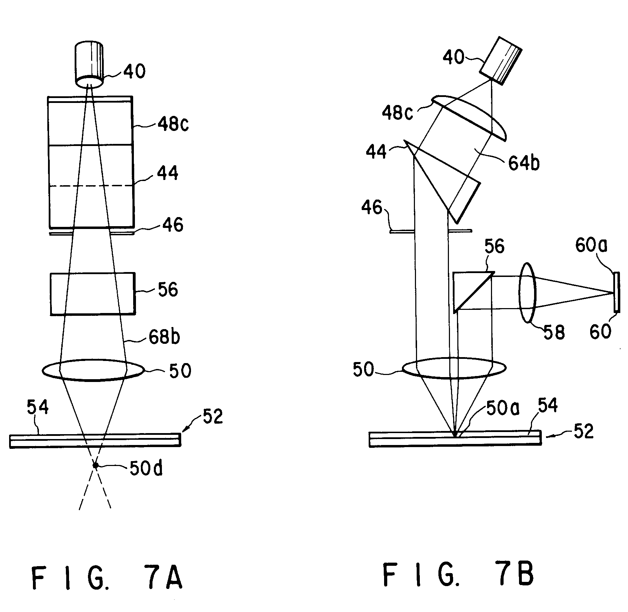

In contrast, as shown in Fig. 7A, the beam component which is made incident on the refraction-free surface of the cylindrical lens 48a is further shaped by the shaping prism 44 and the diaphragm 46 into a beam 68b, which is input to the objective lens 50. Consequently, after passing the objective lens 50, the beam is converged at a position 50d located a further side of the focal point 50a of the objective lens, and therefore the beam is not sufficiently converged on the optical card recording surface 54. Consequently, an insufficiently converged of the beam spot 70 (Fig. 4) lies on the optical card recording surface 54, and the measure of the beam spot 70 in the Y direction component is large enough with respect to that in the X direction.

As described, in the third embodiment, a slit-like beam spot 70 identical to those formed in the first and second embodiments can be formed on the optical card recording surface 54. Consequently, read-out of data from a number of tracks 72 of an optical card 52, and detection of focus errors and tracking errors can be carried out in the same manner as in the first embodiment.

According to the optical head according to each of the above embodiments, also track errors can be detected by means of only one slit-like beam spot 70 simultaneously illuminating a number of tracks 72. Consequently, there is no need to provide a deflection lattice which is used in a conventional single track type head to generate a sub-beam (primary deflection beam) for detection of a track error. Further, the optical heads according to the first and second embodiments can be easily achieved by replacing the sub-beam generating deflection lattice of a single track type head with, for example, cylindrical lenses 48a and 48b.

The major axial direction width of a slit-like beam spot 70 is determined by the maximum angle of the diverging or converging beam made incident on the objective lens 50, and therefore the width can be easily changed by varying the radius of curvature of each of the cylindrical lens 48a, 48b, and 48c, or adjusting the beam diameter made incident on the cylindrical lens by a diaphragm. Therefore, the major axial direction width of the beam spot 70 can be easily adjusted in accordance with the number of tracks 72 from which data items are read out.

The present invention is not limited to the above embodiments, and can be modified into various versions.

For example, in the above embodiments, the cylindrical lenses 48a, 48b, and 48c each having an optical axis and having different refractive index distributions or different radii of curvature in its two cross sections crossing at right angle with each other, are used as the means fore forming a slit-like spot 70. Each of these cylindrical lenses is a toric lens a cross section of which has a radius of curvature of ∞. In place of each of the lenses, some other optical member may be used on the optical axis between the light source 40 and the objective lens 50.

Such an optical member has an optical axis and has different refractive index distributions or different radii of curvature in its two cross sections crossing at right angle with each other. Consequently, a mirror having different refractive effects in the two cross sections may be used. The reflection surface of the mirror has a toric surface shape, or a cylindrical surface shape.

Alternatively, since the lenses have an optical axis and have different refractive index distributions in its two cross sections crossing at right angle with each other, a lens having different refractive effects in the two cross sections may be used.

Further, each of the above embodiments describes an optical head used only for reading-out; however when a light source and an optical member for writing data are added to such an optical head, a double light source type optical head for reading/writing data can be constituted.

## Claims

1. A method for simultaneously reading optical data items (74) recorded on a plurality of tracks (72) arranged in parallel on an optical recording medium (52), by means of a light beam emitted from a light source means (40), the method characterized by comprising the steps of:
(a) forming a slit-like spot (70) by the light beam, the slit-like spot beam having components in longitudinal and transverse axis directions crossing at right angle;
(b) converging the slit-like spot (70) by means of converging means (50) having its focal point (50a) on the optical recording medium (52), the longitudinal axial direction component of the slit-like spot (70) being substantially aligned with the direction of arrangement of the tracks (72), and converged at a non-focal position (50b, 50c) of the converging means (50), and having a length sufficient to illuminate the tracks (72) in the direction of arrangement of the tracks (72), and the transverse axial direction component of the slit-like spot (70) being converged at the focal position (50a) of the converging means (50); and
(c) photoelectrically converting a light beam from an area of the optical recording medium (52) which corresponds to the slit-like spot (70), whereby to read the data items recorded on the tracks along the direction of arrangement of the tracks at the same time.

2. An apparatus for simultaneously reading optical data items (74) recorded on a plurality of tracks (72) arranged in parallel on an optical recording medium (52) by means of a light beam emitted from light source means (40), the device characterized by comprising:
forming means for forming a slit-like spot (70) by the light beam, the slit-like spot beam having components in longitudinal and transverse axis directions crossing at right angle;
converging means (50), having a focal point (50a) on the optical recording medium (52), for converging the slit-like spot (70), the longitudinal axial direction component of the slit-like spot (70) being substantially aligned with the direction of arrangement of the tracks (72), and converged at a non-focal position (50b, 50c) of the converging means (50), and having a length sufficient to illuminate the tracks (72) in the direction of arrangement of the tracks (72), and the transverse axial direction component of the slit-like spot (70) being converged at a focal position (50a) of the converging means (50); and
means (60) for photoelectrically converting a light beam from an area of the optical recording medium (52) which corresponds to the slit-like spot (70), whereby to read the data items recorded on the tracks (72) along the direction of arrangement of the tracks (72) at the same time.

3. An apparatus according to claim 2, characterized in that the forming means (48a, 48b, 48c) has an optical axis, and has different refractive index distributions in its two cross sections crossing at right angle with each other.

4. An apparatus according to claim 2 or 3, characterized in that the forming means has an optical axis, and has different radii of curvature in its two cross sections crossing at right angle with each other.

5. An apparatus according to claim 2, characterized in that the forming means (48a, 48b, 48c) is a cylindrical lens.

6. An apparatus according to claim 5, characterized in that the cylindrical lens (48a, 48b, 48c) has a negative power.

7. An apparatus according to claim 5, characterized in that the cylindrical lens (48b) has a positive power.

8. An apparatus according to any of claims 2 to 6, characterized in that a position (50b) at which the major axis direction component of the slit-like spot (70) is converged is farther than from a focal point (50a) of the converging means (50).

9. An apparatus according to any of claims 2 to 7, characterized in that a position (50c) at which the major axis direction component of the slit-like spot (70) is converged is closer than to a focal point (50a) of the converging means (50).

10. An optical head for simultaneously detecting pits (74) recorded on a plurality of tracks (72) arranged in parallel on an optical recording medium (52), by means of a light beam emitted from light source means (40), the optical head characterized by comprising:
forming means for forming a slit-like spot (70) from the light beam, the slit-like spot beam having components in major and minor axis directions crossing at right angle;
converging means (50), having a focal point (50a) on the optical recording medium (52), for converging the slit-like spot (70), the major axial direction component of the slit-like spot being substantially aligned with the direction of arrangement of the tracks (72), and converged at a non-focal position (50b, 50c) of the converging means (50), and having a length sufficient to illuminate the tracks (72) in the direction of arrangement of the tracks, and the minor axial direction component of the slit-like spot (70) being converged at a focal position (50a) of the converging means (50); and
a plurality of detection means, each arranged to face a corresponding track, in a surface at which formed is an image of an area of the optical recording medium (52) corresponding to the slit-like spot (70), for detecting an image of pits (74) of the corresponding track (72).

11. An optical head according to claim 10, characterized by further comprising detection means (88, 90) for detecting a tracking error, the detection means (84, 86) located on an image-forming surface so as to avoid detection of a pit image (74a) when there is no tracking error.

12. An optical head according to claim 10 or 11, characterized by further comprising detection means (88, 90) for detecting a focus error, the detection means (88, 90) located on an image-forming surface so as to avoid detection of a pit image (74a) when there is no focus error.

13. An optical head according to any of claims 10 to 12, characterized in that the forming means (48a, 48b, 48c) has an optical axis, and has different refractive index distributions in its two cross sections crossing at right angle with each other.

14. An optical head according to any of claims 10 to 12, characterized in that the forming means has an optical axis, and has different radii of curvature in its two cross sections crossing at right angle with each other.

15. An optical head according to any of claims 10 to 14, characterized in that the forming means (48a, 48b, 48c) is a cylindrical lens.

16. An optical head according to claim 15, characterized in that the cylindrical lens (48a, 48c) has a negative power.

17. An optical head according to claim 15, characterized in that the cylindrical lens (48c) has a positive power.

18. An optical head according to any of claims 10 to 16, characterized in that a position (50b) at which the major axis direction component of the light beam is converged is farther than from a focal point (50a) of the converging means (50).

19. An optical head according to any of claims 10 to 15, and 17, characterized in that a position (50c) at which the major axis direction component of the light beam is converged is closer than to a focal point (50a) of the converging means (50).

20. An optical head according to any of claims 10 to 19, characterized in that the minor axis direction component of the light beam has a width substantially the same as the diameter of a pit.
